# EUROPÄISCHE PATENTSCHRIFT

(11) **EP 1 800 576 B1**
(45) Veröffentlichungstag und Bekanntmachung des Hinweises auf die Patenterteilung: **14.05.2008**
(21) Anmeldenummer: 05028246.6
(22) Anmeldetag: 22.12.2005
(51) Int. Cl.: A47J 31/41

(54) **Vorrichtung zum Erhitzen einer Flüssigkeit mit Dampf**
Device for heating a liquid with steam
Dispositif pour chauffer un liquide avec la vapeur

(43) Veröffentlichungstag der Anmeldung: 27.06.2007
(73) Patentinhaber: WMF WÜRTTEMBERGISCHE METALLWARENFABRIK AG, 73309 Geislingen/Steige (DE)
(72) Erfinder: Startz, Armin, 89197 Weidenstetten (DE)
(74) Vertreter: Grünecker, Kinkeldey, Stockmair & Schwanhäusser Anwaltssozietät

(56) Entgegenhaltungen:
- WO-A-03/065860

## Beschreibung

Die Erfindung bezieht sich auf eine Vorrichtung zum Erhitzen einer Flüssigkeit mit Dampf.

Bei Getränkeausgabegeräten, insbesondere bei Getränkeautomaten, die flüssige Lebensmittel, wie beispielsweise Heißgetränke, Suppen und Milchprodukte, ausgeben, werden diese oft mittels Wasserdampf erhitzt, der in die Flüssigkeit eingeleitet wird. Der kondensierende Dampf gibt dabei seine Energie in die zu erhitzende Flüssigkeit ab, ohne merklich Wasservolumen in die Flüssigkeit zu transportieren. Mittels Wasserdampf kann in sehr kurzer Zeit relativ viel Energie effizient in die zu erhitzende Flüssigkeit eingebracht werden. Daher eignet sich die Erhitzung mittels Wasserdampf besonders bei flüssigen Lebensmitteln, die erst auf Anforderung portionsweise erhitzt werden.

Bei bekannten Getränkeausgabegeräten findet die Erhitzung mittels Wasserdampf in einer Erhitzungskammer statt, in die Flüssigkeit und Dampf eingeleitet werden. Diese Erhitzungskammem müssen jedoch in regelmäßigen Abständen und aufwändig gereinigt werden, um ein unerwünschtes Keimwachstum und/oder eine Kontaminierung der nachfolgend zubereiteten Getränke zu vermeiden.

Dokument WO-A-03/065860 offenbart eine Vorrichtung nach dem Oberbegriff des unabhängigen Anspruchs 1.

Der Erfindung liegt somit die Aufgabe zugrunde, eine verbesserte Vorrichtung zum Erhitzen einer Flüssigkeit mit Dampf bereitzustellen.

Die Aufgabe wird durch die im Anspruch 1 angegebenen Merkmale gelöst.

Durch die erfindungsgemäße Kopplungsvorrichtung zwischen der Dampf- und der Flüssigkeitsleitung und die Verwendung einer Perforationskanüle wird die Flüssigkeit bereits in der Leitung erhitzt, wobei eine innige Durchmischung von Flüssigkeit und Dampf erreicht wird, so dass eine Erhitzung der Flüssigkeit in sehr kurzer Zeit erfolgen kann. Weiterhin wird auf diese Weise die Flächengröße und die Anzahl der zu reinigenden Elemente verringert, so dass die Reinigung erleichtert wird. Durch die Ausgestaltung als Kopplungseinrichtung kann diese weiter verwendet werden, selbst wenn beispielsweise die Flüssigkeitsleitung ein Einweg-Schlauch oder Teil einer Einweg-Verpackung ist.

Vorteilhafte Weiterbildungen der Erfindung sind den Unteransprüchen zu entnehmen.

Durch die Unterbringung in dem Gehäuse ist die Perforationskanüle einerseits gegen Verschmutzung geschützt, andererseits kann sich ein Benutzer auch nicht verletzen, wenn er die beiden Leitungen verbindet oder trennt.

Es ist bevorzugt eine Bewegungseinrichtung zum Einstechen der Perforationskanüle in den Wandbereich vorgesehen, da damit eine größere Präzision erreicht wird und vor allen Dingen verhindert wird, dass die Leitung vollständig durchstochen wird, als dies bei einem freihändigen Einstechen der Perforationskanüle der Fall ist.

Zweckmäßigerweise ist eine Verriegelungseinrichtung vorgesehen, die die Perforationskanüle in der den Wandbereich durchdringenden Stellung verriegelt. Auf diese Weise wird verhindert, dass die Perforationskanüle, beispielsweise durch den Förderdruck oder durch einen unbeabsichtigten Zug aus ihrer Kopplungsstellung herausgezogen wird.

Um ein sauberes Einstechen zu gewährleisten, ist bevorzugt eine Anlagefläche für die mit dem perforierbaren Wandbereich versehene Leitung vorgesehen.

Weiterhin ist es vorteilhaft, wenn eine Reinigungseinrichtung für die Perforationskanüle vorgesehen ist, um verbliebene Reste an der Perforationskanüle zu entfernen, was bevorzugt durch eine Abstreifeinrichtung und/oder durch einen Dampfstoß geschieht.

Eine besonders bevorzugte Ausgestaltung der Kopplungseinrichtung enthält ein Gehäuse, in dem die Perforationskanüle in einem Halter untergebracht ist und das auch die Anlagefläche zum Aufnehmen und Unterstützen der entsprechenden Leitung beim Einstechen der Perforationskanüle enthält. Auf diese Weise geschieht das Koppeln der beiden Leitungen in einem abgeschlossenen und gegen Verschmutzung geschützten Bereich.

Das Koppeln der beiden Leitungen erfolgt bevorzugt über eine Klemmhalterung für eine der Leitungen, da dadurch eine Koppelung einfach und problemlos durchgeführt werden kann.

Wird eine der Leitungen zwischen einer ersten Anlagefläche und einer eine Durchtrittsöffnung für die Perforationskanüle aufweisenden weiteren Anlagefläche angeordnet, so wird einerseits die Leitung sehr sicher gehalten und andererseits die Perforationskanüle beim Einstechen geführt und beim Herausziehen durch Abstreifen ihrer Außenoberfläche gereinigt.

Das Einstechen der Perforationskanüle erfolgt bevorzugt über ein nockengesteuertes Druckteil, das bevorzugt so ausgebildet ist, dass es gleichzeitig die Perforationskanüle in der eingestochenen Stellung verriegelt.

Bevorzugt wird die Perforationskanüle an die Dampfleitung angeschlossen, da dadurch eine besonders gute Vermischung zwischen einer größeren Menge Flüssigkeit und einer kleineren Menge Dampf erreicht wird.

Die Erfindung eignet sich besonders für Getränkeausgabegeräte, insbesondere Getränkeausgabeautomaten, die mit einem minimalen Wartungsaufwand auskommen müssen und die insbesondere mit Einweg-Leitungen für die Flüssigkeit arbeiten. Die erfindungsgemäße Kopplungsvorrichtung kann problemlos und ohne Umrüstung die Dampfleitung nach dem Austausch eines Vorratsbehälters mit dem Auslaufschlauch des neuen Vorratsbehälters verbinden.

Ein Ausführungsbeispiel der Erfindung wird nachfolgend anhand der Zeichnungen näher erläutert. Es zeigen:
- Fig. 1: eine perspektivische Darstellung eines Getränkeausgabegeräts mit der erfindungsgemäßen Vorrichtung,
- Fig. 2: eine perspektivische, auseinandergezogene Darstellung der erfindungsgemäßen Kopplungsvorrichtung,
- Fig. 3A: eine perspektivische Darstellung der erfindungsgemäßen Kopplungsvorrichtung während eines ersten Schritts der Kopplung,
- Fig. 3B: eine geschnittene Darstellung der Fig. 3A,
- Fig. 4A: die erfindungsgemäße Kopplungsvorrichtung in vollständig gekoppeltem Zustand, und
- Fig. 4B: die geschnittene Darstellung gemäß Fig. 4A.

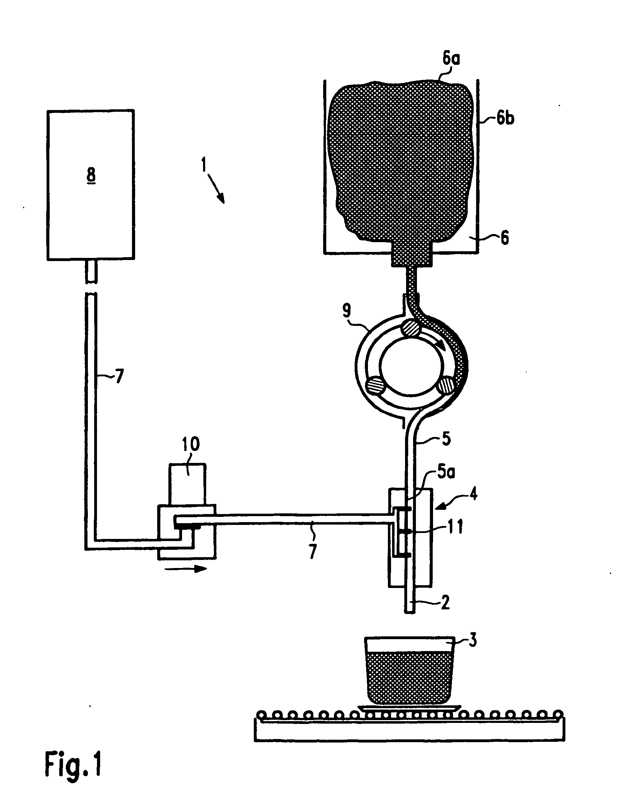

Fig. 1 zeigt eine schematische Darstellung der wichtigsten Bestandteile eines erfindungsgemäß ausgerüsteten Getränkeausgabegeräts 1, das beispielsweise ein Getränkeautomat, ein Bestandteil einer anderen Getränkemaschine, wie beispielsweise einer Kaffeemaschine oder dgl. sein kann. Nachfolgend wird zur Vereinfachung von "Getränken" gesprochen, obwohl das erfindungsgemäße Getränkegerät 1 auch zur Ausgabe anderer flüssiger Lebensmittel, wie beispielsweise Suppe, geeignet ist.

Das Getränkeausgabegerät 1 enthält einen Auslass 2, unter den ein geeignetes Portions- oder Konsumgefäß 3 gestellt werden kann, das mit dem flüssigen Lebensmittel gefüllt werden soll.

Der Auslass 2 befindet sich stromabwärts einer Kopplungseinrichtung 4, die eine erste Leitung 5, die von einem Vorrat 6 oder einer Zubereitungseinrichtung oder dgl. kommt, und eine Leitung 7, die von einer Quelle 8 für ein Erhitzungsmedium, bevorzugt Dampf, kommt, miteinander verbindet. Das Gerät 1 kann eine Vielzahl Vorratsbehälter 6 aufweisen, die mit jeweils einem eigenen Auslass 2 oder über eine Weiche mit einem gemeinsamen Auslass 2 verbunden sind, wobei jedem Vorratsbehälter 6, der zu erhitzende Flüssigkeit enthält, eine eigene Kopplungsvorrichtung 4 zugeordnet ist oder eine Kopplungsvorrichtung kurz vor den Auslass 2, d.h. nach der Weiche, angeordnet ist.

Der Vorratsbehälter 6 ist im dargestellten Ausführungsbeispiel ein sogenanntes Bagin-Box-System, d.h. er enthält einen flexiblen, kollabierenden Beutel 6a, in dem die Flüssigkeit untergebracht ist und ein formgebendes Gehäuse 6b. Der Beutel 6a ist bis auf eine mit der Leitung 5 verbundene Auslassöffnung geschlossen, so dass mit dem Ausfließen der Flüssigkeit keine Luft nachgesaugt werden kann. Bevorzugt ist die Leitung 5 einstückig mit dem Beutel 6a hergestellt und mit diesem als Einweg-Produkt ausgebildet. Bevorzugt ist die Leitung 5 ein flexibler Schlauch aus Kunststoff, enthält jedoch auf jeden Fall einen durchstechbaren oder perforierbaren Wandbereich 5a im Bereich der Kopplungsvorrichtung 4. In die Leitung 5 kann gegebenenfalls eine Förder- oder Dosierpumpe 9 (Schlauchpumpe) oder eine andere Einrichtung zum dosierten Ausgeben der Flüssigkeit aus dem Vorrat 6 vorgesehen sein, die über eine nicht gezeichnete Steuereinrichtung nach Anforderung durch einen Benutzer betätigt wird.

In die vom Dampferzeuger 8 kommende Leitung 7 ist eine Dosier- und Absperreinrichtung 10 eingeschaltet, die ebenfalls über die Steuerung betätigt wird, wenn der Benutzer ein warmes, flüssiges Lebensmittel anfordert. Bevorzugt enthält die Absperreinrichtung ein Magnetventil. Der Dampferzeuger 8 kann ein herkömmlicher Dampfkessel oder ein herkömmlicher Durchlauferhitzer oder dgl. sein.

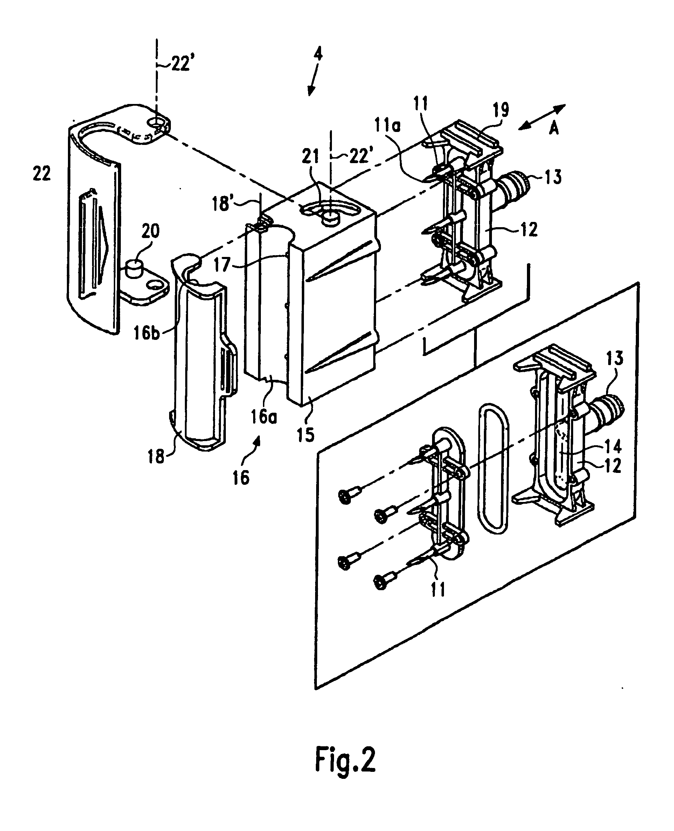

Die Kopplungseinrichtung 4 ist, wie anhand der Fig. 2 bis 4 ersichtlich, als Injektoreinrichtung zum Einspritzen eines dünnen Strahls eines Heizungsmediums, insbesondere Wasserdampf, in den Strom der Flüssigkeit in der Leitung 5 ausgebildet. Zu diesem Zweck enthält die Kopplungseinrichtung wenigstens eine Kanüle 11, die mit dem Dampferzeuger 8 verbunden ist. Die Kanüle 11 ist als Perforationskanüle oder Hohlnadel ausgebildet und enthält eine Spitze 11 a, mit der der perforierbare Wandbereich 5a der Leitung 5 durchstechbar ist. Im dargestellten Ausführungsbeispiel sind drei Perforationskanülen 11 vorgesehen, die in Strömungsrichtung der Flüssigkeit in der Leitung 5 in Reihe hintereinander angeordnet sind. Die Anzahl der Perforationskanülen 11 bestimmt sich nach deren Fließquerschnitt, dem Fließquerschnitt der Leitung 5 und den Fließgeschwindigkeiten in der Leitung 5 und der Leitung 7, und sollte so ausgebildet sein, dass die Flüssigkeit während des Durchlaufens der Kopplungseinrichtung 4 auf die gewünschte Temperatur erhitzt werden kann.

Die Perforationskanüle 11 ist in einem Halter 12 befestigt, der einen Anschluss 13 zum bevorzugt lösbaren Anschließen der Leitung 7 enthält. Sind mehrere Perforationskanülen 11 vorgesehen, so enthält der Halter 12 eine abgedichtete Verteilkammer 14 zum gleichmäßigen Verteilen des Erhitzungsmediums auf alle Perforationskanülen 11.

Die Perforationskanüle 11 ist in einem Gehäuse 15 untergebracht. Das Gehäuse 15 ist hohl und so ausgebildet, dass sowohl die Perforationskanülen 11 gegen Verschmutzung als auch der Benutzer gegen Verletzung durch die Spitzen 11 a geschützt ist. Der Träger 12 bildet eine Seitenwand des Gehäuses 15 und ist in Richtung des Doppelpfeiles A im Inneren des Gehäuses 15 verschiebbar.

Das Gehäuse 15 enthält weiterhin eine Halterung 16, mit der die Kopplungseinrichtung 4 an der Leitung 5 festgeklemmt werden kann. Die Halterung 16 enthält eine erste Anlagefläche 16a, die die dem Halter 12 gegenüberliegende Seitenwand des Gehäuses 15 bildet und bevorzugt an die äußere Form der Leitung 5 angepasst ist, d.h. bei einer Leitung mit rundem Querschnitt mit gleichem Durchmesser ausgerundet ist. Die Anlagefläche 16a ist als Matrize ausgebildet und enthält Durchtrittslöcher 17, die den Durchtritt der Perforationskanülen 11 gestatten und diese führen. Bevorzugt sind die Durchmesser der Öffnungen 17 so an die Außendurchmesser der Perforationskanülen 11 angepasst (d.h. gleich groß oder nur geringfügig größer), dass sie als Reinigungseinrichtung wirken, die durch Abstreifen den äußeren Umfang der Perforationskanülen reinigen.

Die Halterung 16 enthält weiterhin eine zweite Anlagefläche 16b, die der ersten Anlagefläche 16a gegenüberliegt und eine Gegenfläche zum Aufnehmen der Perforationskräfte bildet. Die zweite Anlagefläche 16b ist an einer Klappe 18 angeordnet, die beweglich am Gehäuse 5 gelagert, im dargestellten Ausführungsbeispiel um eine Achse 18' verschwenkbar ist. Auch die zweite Anlagefläche 16b ist an die äußere Form der Leitung 5 angepasst, d.h. im dargestellten Ausführungsbeispiel ausgerundet. Die beiden Anlageflächen 16a, 16b schließen jedoch einen Durchgangsraum ein, der einen Klemmsitz der Kopplungseinrichtung 4 an der Leitung 5 gestattet, d.h. gleich groß oder bevorzugt kleiner ist als die Außenabmessung der Leitung 5.

Der Halter 12 weist an wenigstens einer in oder entgegen der Strömungsrichtung der Flüssigkeit in der Leitung 5 weisenden Seite, bevorzugt an beiden Seiten, eine Gleitlagerung 19 für einen Nocken 20 auf. Der oder die Nocken 20 sind an einem Druckstück 22 fest angeordnet, das am Gehäuse 15 um eine Achse 22' schwenkbar gelagert ist. Das Gehäuse 15 ist an der den Nocken 20 zugewandten Seiten mit einer Führung 21 für die Nocken 20 versehen. Die Führung 21 und die Gleitlagerung 19 sind so angeordnet, dass das Druckteil 22 als Bewegungseinrichtung zum Bewegen des Halters 12 an der Leitung 7 in Richtung des Doppelpfeiles A wirkt. Dabei erstrecken sich die Nocken 20 durch die Führung 21 in die Gleitlagerung 19 hinein und ziehen den Halter 12 in Richtung auf die zweite Anlagefläche 16b, wenn die Leitung 7 mit der Leitung 5 gekoppelt werden soll.

Das Druckteil 22 dient weiterhin als Verriegelungseinrichtung zum Verriegeln der Klappe 18 am Gehäuse 15 in einer Stellung, in der die Leitung 5 zwischen den beiden Anlageflächen 16a, 16b eingeschlossen ist. Im dargestellten Ausführungsbeispiel geschieht diese Verriegelung durch eine Über-Totpunkt-Klemmung des Druckstückes 22 über die Klappe 18. Um dies zu erreichen, überschneiden sich die Bewegungskreise der Klappe 18 um die Achse 18' und des Druckteils 22 um die Achse 22' in einer Weise, wie dies durch die Materialelastizität von Leitung 5 und/oder Klappe 18 und/oder Druckteil 22 für eine manuelle Verriegelung gerade noch gestattet ist. Das Druckteil 22 wirkt somit als Bewegungseinrichtung für die Perforationskanüle 11 und als Verriegelungseinrichtung zum Verriegeln der Klappe 18 beim Schließen der Halterung 16.

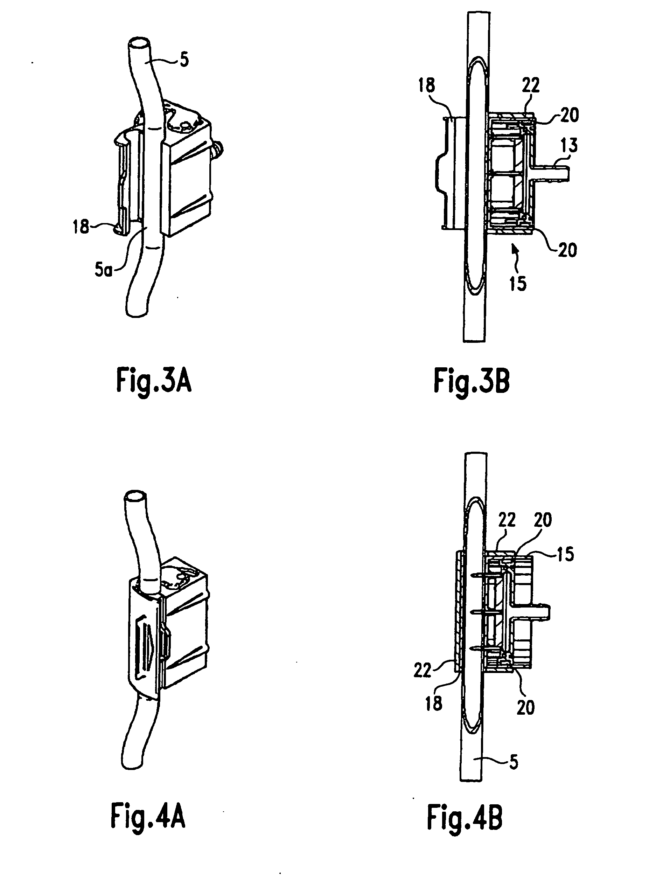

Beim erstmaligen Inbetriebsetzen der Vorrichtung 1 wird der Vorrat 6 mit einem flüssigen Lebensmittel beschickt. Dies kann beispielsweise dadurch geschehen, dass ein Vorratsbehälter gefüllt wird und die Leitung 5, die bevorzugt eine Einweg-Leitung, wie beispielsweise ein Kunststoffschlauch ist, angeschlossen wird. Dies kann weiterhin dadurch geschehen, dass der oben beschriebene Einweg-Beutel mit integrierter Leitung 5 eingesetzt oder ein verbrauchter Beutel gegen einen vollen Beutel ausgetauscht wird. Die Leitung 5 wird an die Pumpe 9 angeschlossen und mit einem im Getränkeausgabegerät 1 integrierten Auslass 2 verbunden. Zum Anschluss der Dampfleitung 7 wird diese, falls sie nicht bereits mit der Kopplungseinrichtung 4 einstückig oder fest verbunden ist, an den Anschluss 13 der Kopplungseinrichtung 4 angeschlossen. Dann wird das Druckstück 22 in eine Stellung bewegt, in der die Klappe 18 geöffnet werden kann und in der die Nocken 20 den Träger 12 der Perforationskanülen 11 in eine Stellung bewegt haben, in der die Perforationskanülen 11 hinter die Öffnungen 17 zurückgezogen sind. Diese Stellung ist in den Fig. 3A und 3B gezeigt. Dann wird die Leitung 5 mit ihrem perforierbaren Wandbereich 5a an die erste Anlagefläche 16a angelegt und die Klappe 18 geschlossen. Anschließend wird das Druckteil 22 um seine Achse 22' in eine Perforier- und Verriegelungsstellung bewegt, wie sie in den Fig. 4A und 4B zu sehen ist. Während der Bewegung des Druckteils 22 über die Klappe 18 wird durch die durch die Führung 21 in das Gleitlager 19 eingreifenden Nocken 20 der Träger 12 in Richtung der Anlagefläche 16a und des dort anliegenden, perforierbaren Wandbereichs der Leitung 5 verschoben, wobei die Perforationskanülen 11 mit ihren Spitzen 11a durch die Öffnungen 17 hindurchtreten und in die Leitung 5 so weit eindringen, dass der gesamte Öffnungsquerschnitt der Perforationskanülen 11 im Inneren der Leitung 5 liegt. Die Lage der Nocken 20 bezüglich der Drehachse 22' und die Anordnung der Führung 21 sollen so aufeinander abgestimmt werden, dass die Perforationskanülen 11 die an der zweiten Anlagefläche 16b anliegende Wandung der Leitung 5 nicht durchstechen, wenn sich das Druckteil 22 in der in den Fig. 4A, 4B dargestellten Verriegelungsstellung voll über die Klappe 18 bewegt hat und durch diese Verriegelung sowohl die Klappe mit ihrer Anlagefläche 16b in fester Anlage an der Leitung 5 hält und somit die Kopplungsvorrichtung 4 mit der angeschlossenen Leitung 7 an der Leitung 5 fixiert, als auch die Perforationskanülen 11 im Inneren der Leitung 5 hält. Kurz vor bzw. während des Durchstechens des Wandbereiches 5a der Leitung 5 kann durch die Perforationskanülen 11 ein kurzer Dampfstoß gegeben werden, der den Wandbereich 5a an den Perforationsstellen und gegebenenfalls auch die Außenseiten der Perforationskanülen 11 sterilisiert.

Sobald sich die Perforationskanülen 11 im Inneren der Leitung 5 befinden, kann das flüssige Lebensmittel beim Durchströmen der Kopplungseinrichtung 4 auf die gewünschte und vorab eingestellte Temperatur erwärmt werden.

Soll die Verbindung zwischen den Leitungen 5 und 7 gelöst werden, so wird das Druckteil 22 zurückgeschwenkt, wodurch einerseits der Träger 12 mit den Perforationskanülen 11 durch die Nocken 20 wieder in eine Stellung zurückgeschoben wird, in der die Perforationskanülen 11 aus der Leitung 5 und zurück durch die Öffnungen 17 herausgezogen werden. Beim Durchziehen durch die Öffnungen 17 werden etwa verbleibende Reste der Flüssigkeit von den Perforationskanülen 11 abgestreift und diese damit gereinigt. Dann wird die Klappe 18 geöffnet und die Kopplungsvorrichtung 4 von der Leitung 5 getrennt. Anschließend wird die Leitung 5, gegebenenfalls zusammen mit einem Einweg-Vorratsbehälter verworfen und die Vorrichtung neu mit Flüssigkeit beladen. Die Kopplungsvorrichtung 4 wird bevorzugt wieder verwendet und in der oben beschriebenen Weise mit der neuen Leitung 5 verbunden.

In Abwandlung des beschriebenen und gezeichneten Ausführungsbeispiels kann die Leitung 5 nur bereichsweise aus einem perforierbaren Material bestehen, wobei nur dieser Teil beim gründlichen Reinigung und/oder beim Wechseln des Produktes und/oder beim Nachfüllen des Produktes ausgetauscht werden muss. Die Kopplungsvorrichtung kann eine konstruktive abweichende Halterung für die Leitung aufweisen, wobei jedoch bevorzugt eine Anlagefläche für die Leitung vorgesehen ist, die dem gesamten Anordnungsbereich der Perforationskanülen gegenüberliegt, so dass die Leitung beim Einstechen vollflächig unterstützt wird. Es ist weiterhin möglich, die Kopplungsvorrichtung mit der Flüssigkeitsleitung zu verbinden und die Perforationskanülen in die Dampfleitung einzustechen, wenn eine besonders starke Erhitzung gewünscht wird. Die Bewegungs-, Verriegelungs- und Perforationsfunktion kann auch durch unterschiedliche Elemente bewirkt werden. So kann die Klappe am Gehäuse in der geschlossenen Stellung durch einen Rastmechanismus gehalten werden, während die Perforationskanüle manuell eingedrückt und dort verriegelt wird.

## Patentansprüche

1. Vorrichtung zum Erhitzen eines flüssigen Lebensmittels mit Dampf, mit einer von der Flüssigkeit und einer vom Dampf durchströmten Leitung (5, 7), wobei eine Kopplungseinrichtung (4) zum Verbinden der Leintungen (5, 7) vorgesehen ist, **dadurch gekennzeichnet, daß** die Kopplungseinrichtung wenigstens eine Perforationskanüle (11) enthält, die mit einer der Leitungen (7, 5) verbunden ist und in einen perforierbaren Wandbereich (5a) an der anderen Leitung (5, 7) einstechbar ist.

2. Vorrichtung nach Anspruch 1, **dadurch gekennzeichnet, dass** die Perforationskanüle (11) in einem Gehäuse (15) untergebracht ist.

3. Vorrichtung nach Anspruch 1 oder 2, **dadurch gekennzeichnet, dass** die Kopplungseinrichtung (4) eine Bewegungseinrichtung (22) zum Einstechen der Perforationskanüle (11) in den Wandbereich (5a) aufweist.

4. Vorrichtung nach einem der Ansprüche 1 bis 3, **dadurch gekennzeichnet, dass** die Kopplungseinrichtung (4) eine Verriegelungseinrichtung (22) für die Perforationskanüle (11) in der den Wandbereich (5a) durchdringenden Stellung aufweist.

5. Vorrichtung nach einem der Ansprüche 1 bis 4, **dadurch gekennzeichnet, dass** die Kopplungseinrichtung (4) eine Anlagefläche (16b) für die mit dem perforierbaren Wandbereich (5a) versehene Leitung (5) enthält.

6. Vorrichtung nach einem der Ansprüche 1 bis 5, **dadurch gekennzeichnet, dass** eine Reinigungseinrichtung für die Perforationskanüle (11) vorgesehen ist.

7. Vorrichtung nach Anspruch 6, **dadurch gekennzeichnet, dass** eine Abstreifeinrichtung (17) zum mechanischen Reinigen der Perforationskanüle (11) und/oder eine Einrichtung zum Beaufschlagen des Wandbereichs (5a) und/oder der Perforationskanüle (11) mit Dampf zum Entkeimen vorgesehen ist.

8. Vorrichtung nach einem der Ansprüche 1 bis 7, **dadurch gekennzeichnet, dass** die Kopplungseinrichtung (4) ein Gehäuse (15) mit einer Anlagefläche (16b) zum Aufnehmen und Unterstützen einer der Leitungen (5) und einen Halter (12) für die Perforationskanüle (11) enthält, an dem die andere Leitung (7) angeschlossen ist, wobei die Anlagefläche (16b) und der Halter (12) zum Einstechen der Perforationskanüle (11) in den Wandbereich (5a) relativ zueinander bewegbar sind.

9. Vorrichtung nach einem der Ansprüche 1 bis 8, **dadurch gekennzeichnet, dass** die Kopplungseinrichtung (4) eine Halterung (16) aufweist, die mit einer Anlagefläche (16b) für den perforierbaren Wandbereich (5a) versehen ist.

10. Vorrichtung nach Anspruch 8 oder 9, **dadurch gekennzeichnet, dass** zwischen der an der Anlagefläche (16b) anliegenden Leitung (5) und der Perforationskanüle (11) eine mit einer Öffnung (17) versehene weitere Anlagefläche (16a) angeordnet ist, wobei der Durchmesser der Öffnung (17) gleich groß oder nur unwesentlich größer ist als der Außendurchmesser der Perforationskanüle (11), so dass die Öffnung (17) als Abstreifeinrichtung für die Perforationskanüle (11) wirkt.

11. Vorrichtung nach einem der Ansprüche 1 bis 10, **dadurch gekennzeichnet, dass** die Kopplungseinrichtung (4) eine Nockensteuerung (19, 20, 21) enthält, die die Perforationskanule (11) und den perforierbaren Wandbereich (5a) relativ zueinander bewegt.

12. Vorrichtung nach einem der Ansprüche 1 bis 11 **dadurch gekennzeichnet, dass** die Kopplungseinrichtung (4) ein Druckteil (22) enthält, das eine Nockensteuerung (19, 20, 21), die die Perforationskanüle (11) und den perforierbaren Wandbereich (5a) relativ zueinander bewegt, und eine Verriegelungseinrichtung enthält, die die Perforationskanüle (11) in einer den Wandbereich (5a) durchdringenden Stellung verriegelt.

13. Vorrichtung nach einem der Ansprüche 1 bis 12, **dadurch gekennzeichnet, dass** die Perforationskanüle (11) mit der Dampfleitung (7) verbunden ist.

14. Getränkeausgabegerät (1) **gekennzeichnet durch** eine Vorrichtung nach einem der Ansprüche 1 bis 13.

15. Getränkeausgabegerät nach Anspruch 14, **dadurch gekennzeichnet, dass** der flexible Wandbereich (5a) Teil eines Einweg-Auslaufschlauches (5) ist.

## Claims

1. A device for heating a liquid food with steam, comprising a liquid-transporting and a steam-transporting pipe (5, 7), a coupling device (4) being provided for connecting the pipes (5, 7), **characterised in that** the coupling device (4) contains at least one perforating needle (11), which is connected to one of the pipes (7, 5) and can pierce a perforable wall section (5a) on the other pipe (5, 7).

2. The device according to Claim 1, **characterised in that** the perforating needle (11) is accommodated in a housing (15).

3. The device according to Claim 1 or 2, **characterised in that** the coupling device (4) comprises a movement device (22) for piercing the perforating needle (11) into the wall section (5a).

4. The device according to one of the Claims 1 to 3, **characterised in that** the coupling device (4) comprises a locking device (22) for the perforating needle (11) in the position penetrating the wall section (5a).

5. The device according to one of the Claims 1 to 4, **characterised in that** the coupling device (4) contains a locating face (16b) for the pipe (5) provided with the perforable wall section (5a).

6. The device according to one of the Claims 1 to 5, **characterised in that** a cleaning device is provided for the perforating needle (11).

7. The device according to Claim 6, **characterised in that** a wiping device (17) for mechanically cleaning the perforating needle (11) and / or a device for applying steam to the wall section (5a) and / or the perforating needle (11) is provided for sterilisation.

8. The device according to one of the Claims 1 to 7, **characterised in that** the coupling device (4) contains a housing (15) with a locating face (16b) for accepting and supporting one of the pipes (5) and a holder (12) for the perforating needle (11), to which the other pipe (7) is connected, wherein the locating face (16b) and the holder (12) can be moved relative to one another for piercing the perforating needle (11) into the wall section (5a).

9. The device according to one of the Claims 1 to 8, **characterised in that** the coupling device (4) comprises a holder (16), which is provided with a locating face (16b) for the perforable wall section (5a).

10. The device according to Claim 8 or 9, **characterised in that** between the pipe (5) contacting the locating face (16b) and the perforating needle (11) a further locating face (16a), provided with an opening (17), is arranged, wherein the diameter of the opening (17) is equally large or only negligibly larger than the outer diameter of the perforating needle (11) so that the opening (17) acts as a wiping device for the perforating needle (11).

11. The device according to one of the Claims 1 to 10, **characterised in that** the coupling device (4) comprises a cam control (19, 20, 21) which moves the perforating needle (11) and the perforable wall section (5a) relative to one another.

12. The device according to one of the Claims 1 to 11, **characterised in that** the coupling device (4) contains a thrust piece (22), which contains a cam control (19, 20, 21), which moves the perforating needle (11) and the perforable wall section (5a) relative to one another, and a locking device, which locks the perforating needle (11) in a position penetrating the wall section (5a).

13. The device according to one of the Claims 1 to 12, **characterised in that** the perforating needle (11) is connected to the steam pipe (7).

14. A drink dispensing device (1) **characterised by** a device according to one of the Claims 1 to 13.

15. The drink dispensing device according to Claim 14, **characterised in that** the flexible wall section (5a) is part of a disposable discharge hose (5).

## Revendications

1. Dispositif pour chauffer un produit alimentaire liquide avec de la vapeur, avec une conduite (5, 7) traversée par un écoulement de liquide et une autre traversé par un écoulement de vapeur, un dispositif de couplage (4) étant prévu pour relier les conduites (5, 7), **caractérisé en ce que** le dispositif de couplage contient au moins une canule de perforation (11) reliée à l'une des conduites (7, 5) et susceptible d'être enfichée dans une zone de paroi (5a) perforable sur l'autre conduite (5, 7).

2. Dispositif selon la revendication 1, **caractérisé en ce que** la canule de perforation (11) est logée dans un boîtier (15).

3. Dispositif selon la revendication 1 ou 2, **caractérisé en ce que** le dispositif de couplage (4) présente un dispositif de déplacement (22) pour enficher la canule de perforation (11) dans la zone de paroi (5a).

4. Dispositif selon l'une des revendications 1 à 3, **caractérisé en ce que** le dispositif de couplage (4) présente un dispositif de verrouillage (22) pour la canule de perforation (11), à la position pénétrant dans la zone de paroi (5a).

5. Dispositif selon l'une des revendications 1 à 4, **caractérisé en ce que** le dispositif de couplage (4) contient une face d'appui (16b) pour la conduite (5) munie de la zone de paroi (5a) perforable.

6. Dispositif selon l'une des revendications 1 à 5, **caractérisé en ce qu'**un dispositif de nettoyage est prévu pour la canule de performation (11).

7. Dispositif selon la revendication 6, **caractérisé en ce qu'**un dispositif de raclage (17) est prévu pour nettoyer mécaniquement la canule de perforation (11) et/ou un dispositif est prévu pour soumettre la zone de paroi (5a) et/ou la canule de perforation (11) à de la vapeur, afin d'effectuer une stérilisation.

8. Dispositif selon l'une des revendications 1 à 7, **caractérisé en ce que** le dispositif de couplage (4) contient un boîtier (15), avec une face d'appui (16b) pour supporter et soutenir l'une des conduites (5), et un support (12) pour la canule de perforation (11), auquel l'autre conduite (7) est raccordée, la face d'appui (16b) et le support (12) étant déplaçables l'un par rapport à l'autre pour l'enfichage de la canule de perforation (11) dans la zone de paroi (5a).

9. Dispositif selon l'une des revendications 1 à 8, **caractérisé en ce que** le dispositif de couplage (4) présente une fixation (16) munie d'une face d'appui (16b) pour la zone de paroi (5a) perforable.

10. Dispositif selon la revendication 8 ou 9, **caractérisé en ce qu'**entre la conduite (5) en appui sur la face d'appui (16b) et la canule de perforation (11) est disposée une autre face d'appui (16a) munie d'une ouverture (17), le diamètre de l'ouverture (17) étant égal ou seulement très peu supérieur au diamètre extérieur de la canule de perforation (11), de manière que l'ouverture (17) agisse comme dispositif de raclage pour la canule de perforation (11).

11. Dispositif selon l'une des revendications 1 à 10, **caractérisé en ce que** le dispositif de couplage (4) contient une commande à came (19, 20, 21), déplaçant l'une par rapport à l'autre la canule de perforation (11) et la zone de paroi (5a) perforable.

12. Dispositif selon l'une des revendications 1 à 11, **caractérisé en ce que** le dispositif de couplage (4) contient une pièce de pressage (22) qui contient une commande à came (19, 20, 21), qui déplace l'une par rapport à l'autre la canule de perforation (11) et la zone de paroi (5a) perforable, et un dispositif de verrouillage qui verrouille la canule de perforation (11) en une position pénétrant dans la zone de paroi (5a).

13. Dispositif selon l'une des revendications 1 à 12, **caractérisé en ce que** la canule de perforation (11) est reliée à la conduite à vapeur (7).

14. Appareil de distribution de boissons (1), **caractérisé par** un dispositif selon l'une des revendications 1 à 13.

15. Appareil de distribution de boissons selon la revendication 14, **caractérisé en ce que** la zone de paroi (5a) flexible fait partie d'un tuyau d'évacuation (5) jetable.
